# DEMANDE DE BREVET EUROPEEN

(11) **EP 1 672 953 A1**
(43) Date de publication de la demande: **21.06.2006**
(21) Numéro de dépôt: 05301062.5
(22) Date de dépôt: 15.12.2005
(51) Int. Cl.: H04Q 7/38

(54) **Procédé pour améliorer la gestion de la mobilité dans un système cellulaire de communications mobiles**

(30) Priorité: 17.12.2004 FR 0453038
(71) Demandeur: ALCATEL, 75008 Paris (FR)
(72) Inventeur: Drevon, Nicolas, 75016 Paris (FR); Baudet, Serge, 75014 Paris (FR)
(74) Mandataire: El Manouni, Josiane

(57) **Abrégé**

Un des objets de la présente invention est un procédé pour améliorer la gestion de la mobilité dans un système cellulaire de communications mobiles dans lequel les cellules sont regroupées en structures de localisation comportant des cellules supportant différentes technologies d'accès radio, ledit procédé comportant des étapes selon lesquelles :
- un terminal mobile (MT) dans une cellule donnée transmet (1) à une entité de réseau (CN) une requête d'enregistrement dans une structure de localisation incluant ladite cellule,
- sur réception de ladite requête, ladite entité de réseau (CN) transmet (2) au terminal mobile (MT) une réponse comportant au moins une indication, dite indication de technologie d'accès radio, relative à au moins une technologie d'accès radio autorisée et/ou au moins une technologie d'accès radio interdite pour ledit terminal mobile, au moins dans ladite structure de localisation.

## Description

La présente invention concerne d'une manière générale les systèmes cellulaires de communications mobiles.

D'une manière générale, les systèmes cellulaires de communications mobiles font l'objet de normalisation, et pour plus d'informations on pourra se reporter aux normes correspondantes, publiées par les organismes de normalisation correspondants.

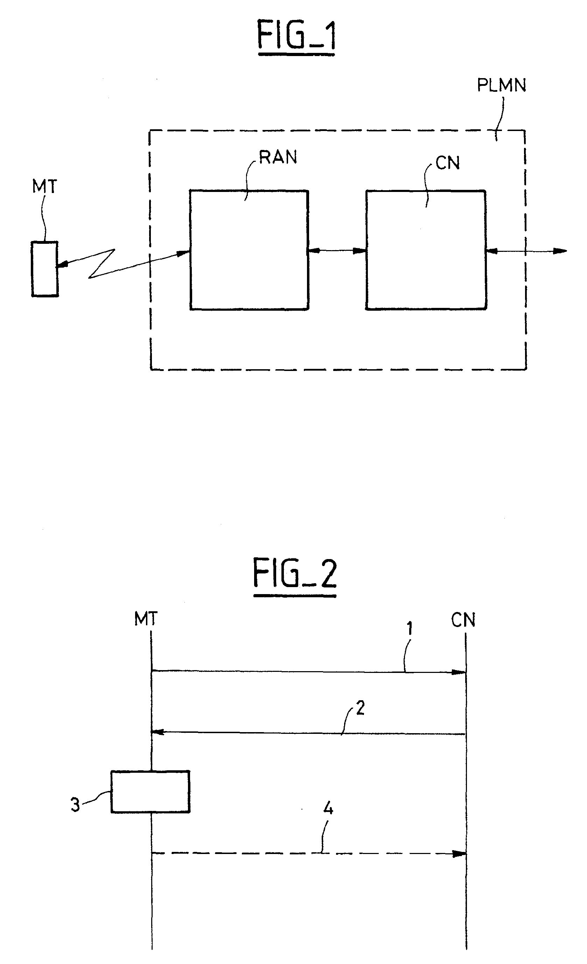

L'architecture générale d'un tel système est rappelée brièvement en relation avec la figure 1. Un tel système comporte un réseau de communications mobiles, noté PLMN (pour « Public Land Mobile Network »), communiquant avec des terminaux mobiles notés MT (pour « Mobile Terminal ») et avec des réseaux extérieurs (non illustrés spécifiquement).

Le réseau comporte lui-même un réseau d'accès radio noté RAN (pour « Radio Access Network ») chargé principalement de la transmission et de la gestion des ressources radio sur l'interface radio entre le réseau et les terminaux mobiles, et un réseau coeur noté CN (pour « Core Network ») chargé principalement de l'acheminement et de la gestion des communications de ou vers les terminaux mobiles.

D'une manière générale, ces systèmes ont une architecture cellulaire, et dans un but de gestion de mobilité des utilisateurs, les cellules sont regroupées en structures de localisation généralement appelées zones de localisation (ou LA, pour « Location Area ») dans le cas de services en mode circuit, ou zones de routage (ou RA, pour « Routing Area »), incluses dans les zones de localisation, dans le cas de services en mode paquet.

Dans ce qui suit, on considèrera, à titre d'exemple, le cas de structures de localisation correspondant à des zones de localisation (appelées plus simplement LA dans ce qui suit) et le cas de mécanisme de sélection de cellule par le terminal dans un mode appelé mode veille (ou « idle mode »).

Un terminal mobile informe le réseau, généralement au moyen d'une procédure dite de mise à jour de localisation (ou « Location Updating »), de tout changement de LA dû à un changement de cellule sélectionnée pour accéder au réseau. Ceci permet au réseau, d'une part, dans le cas d'appel entrant destiné à ce terminal, de rechercher ce terminal dans la LA correspondante (au moyen d'une procédure dite de recherche, ou « paging »), et d'autre part de contrôler les droits de l'utilisateur à accéder à la cellule sélectionnée, préalablement à son enregistrement dans la LA correspondante.

Dans le cadre d'une telle procédure de mise à jour de localisation, le terminal mobile transmet au réseau un message dit de requête de mise à jour de localisation (ou « Location Updating Request »).

Après vérification des droits de l'utilisateur, notamment sur la base du profil d'abonnement souscrit, le réseau peut répondre de deux manières possibles :
- dans le cas de réponse positive, le message retourné par le réseau au terminal mobile est un message dit d'acceptation de mise à jour de localisation (ou « Location Updating Accept ») ; l'utilisateur est alors enregistré dans la nouvelle LA,
- dans le cas de réponse négative, le message retourné par le réseau au terminal mobile est un message dit de rejet de mise à jour de localisation (ou « Location Updating Reject »).

Par ailleurs, les évolutions de la technologie conduisent à distinguer différentes technologies d'accès radio (appelées aussi plus simplement dans ce qui suit RAT, pour « Radio Access Technology »).

Un exemple de RAT est le GSM (« Global System for Mobile communication »), qui utilise la technique d'accès FDMA/TDMA (« Frequency Division Multiple Access / Time Division Multiple Access ») notamment dans des systèmes dits de deuxième génération.

Un autre exemple de RAT est le W-CDMA (« Wideband - Code Division Multiple Access »), ainsi que le TD-CDMA (« Time Division - Code Division Multiple Access ») utilisés notamment dans des systèmes dits de troisième génération, tels que notamment l'UMTS (« Universal Mobile Telecommunication System »).

D'autres exemples de RAT sont bien entendu possibles ; par exemple CDMA 2000, UMA (Unlicenced Mobile Access), WLAN-3GPP, etc. On peut également imaginer que la bande de fréquence est un élément discriminant comme par exemple GSM 900 ou GSM 1800.

En outre, un même système (ou un même opérateur) peut utiliser différentes RAT (un tel système pouvant aussi être appelé système « multi-RAT »). Ceci correspond par exemple au cas d'infrastructures de troisième génération introduites progressivement dans des infrastructures existantes de deuxième génération, ce qui permet notamment, pour des services supportés en commun par ces deux générations, tels que notamment des services de type téléphonie, d'obtenir une continuité de service, en bénéficiant de la couverture existante fournie par les infrastructures existantes de deuxième génération.

Dans un tel système de type « multi-RAT », différents profils d'abonnement peuvent être proposés par les opérateurs ; notamment le profil d'abonnement peut être tel que seul l'accès à certaine(s) RAT(s) est autorisé, et l'accès à d'autre(s) RAT(s) est interdit.

Un problème à résoudre est alors d'autoriser un terminal mobile pouvant supporter différentes RAT(s) (par exemple GSM et UMTS) à accéder seulement à certaine(s) RAT(s) (par exemple GSM, et non UMTS).

Une solution est de configurer les LAs de telle sorte que les cellules d'une LA soient associées à une seule RAT (une telle LA pouvant aussi être appelée, en anglais, «single-RAT LA »), et de n'accepter une requête d'enregistrement de ce terminal que dans une LA associée à cette RAT.

Une telle solution de type « single-RAT LA » a notamment pour inconvénient d'accroître inutilement le trafic de mise à jour de localisation, puisqu'une procédure de mise à jour de localisation est alors nécessaire pour la seule raison qu'un terminal mobile passe d'une LA associée à une RAT à une autre LA associée à une autre RAT (ce qui risque de se produire relativement souvent, notamment relativement plus souvent qu'un changement de LA dans un système à RAT unique).

Une solution pour éviter de tels inconvénients est de configurer les LAs de telle sorte que différentes cellules d'une LA puissent être associées à des RATs différentes (une telle LA pouvant aussi être appelée, en anglais, « multi-RAT LA »).

Cependant, avec une telle solution de type « multi-RAT LA », l'état actuel de la norme ne permet pas d'autoriser un terminal mobile pouvant supporter différentes RATs à accéder seulement à certaine(s) RAT(s) ; en effet, toutes les cellules d'une LA « multi-RAT » sont autorisées quelle que soit la RAT. En d'autres termes, dans l'état actuel de la norme, les limitations de droits d'accès (notamment selon le profil d'abonnement) ne peuvent être prises en compte à un niveau inférieur à celui d'une LA, ce qui pose des problèmes pour des limitations de droits d'accès selon certains critères, notamment selon la RAT.

La présente invention a notamment pour but de résoudre tout ou partie de ces problèmes et/ou d'éviter tout ou partie de ces inconvénients. Notamment un des buts de la présente invention est de préserver les avantages de la solution « multi-RAT LA » sans en présenter les inconvénients. Plus généralement un des buts de la présente invention est d'améliorer la gestion de la mobilité, dans les systèmes pouvant utiliser différentes RATs.

Un des objets de la présente invention est un procédé pour améliorer la gestion de la mobilité dans un système cellulaire de communications mobiles dans lequel les cellules sont regroupées en structures de localisation comportant des cellules supportant différentes technologies d'accès radio, ledit procédé comportant des étapes selon lesquelles :
- un terminal mobile dans une cellule donnée transmet à une entité de réseau une requête d'enregistrement dans une structure de localisation incluant ladite cellule,
- sur réception de ladite requête, ladite entité de réseau transmet au terminal mobile une réponse comportant au moins une indication, dite indication de technologie d'accès radio, relative à au moins une technologie d'accès radio autorisée et/ou au moins une technologie d'accès radio interdite pour ledit terminal mobile, au moins dans ladite structure de localisation.

Un autre objet de la présente invention est un terminal mobile, comportant des moyens pour mettre en oeuvre un tel procédé.

Un autre objet de la présente invention est un module d'identification d'abonné (appelé aussi SIM/USIM, pour « GSM Subscriber Identity Module /Universal Subscriber Identity Module ») associé à un terminal mobile, comportant des moyens pour mettre en oeuvre un tel procédé.

Un autre objet de la présente invention est une entité de réseau de communications mobiles, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de communications mobiles,
- la figure 2 est un diagramme destiné à illustrer un exemple de procédé suivant la présente invention,
- la figure 3 est un diagramme destiné à illustrer un exemple de moyens pouvant être utilisés dans un terminal mobile, et dans un module d'identification d'abonné associé à ce terminal, pour mettre en oeuvre un procédé suivant la présente invention,
- la figure 4 est un diagramme destiné à illustrer un exemple de moyens pouvant être utilisés dans une entité de réseau pour mettre en oeuvre un procédé suivant la présente invention.

La figure 2 illustre un exemple de procédé suivant l'invention.

Dans une étape notée 1, un terminal mobile noté MT transmet une requête d'enregistrement à une entité de réseau, correspondant généralement à une entité serveuse de réseau coeur, notée CN (pour « Core Network »).

Notamment, dans le cas de services en mode circuit, une telle entité serveuse de réseau coeur correspond à une entité de type MSC/VLR (pour « Mobile Switching Centre / Visitor Location Register »). Pour le cas de services en mode paquet, une telle entité serveuse de réseau coeur correspondrait à une entité de type SGSN (pour « Serving GPRS Support Node »).

Ladite requête d'enregistrement peut être élaborée par le terminal d'une manière habituelle (et par conséquent non re-décrite ici de manière plus détaillée).

Suivant un exemple, ladite requête d'enregistrement peut correspondre à une requête de mise à jour de localisation (ou « Location Update Request »), généralement transmise à la suite d'un changement de cellule sélectionnée par le terminal mobile, coïncidant avec un changement de LA.

Dans une étape notée 2, en réponse à ladite requête, l'entité de réseau coeur CN transmet une réponse au terminal mobile MT.

Outre les informations contenues de manière habituelle (et par conséquent non re-décrites ici de manière plus détaillée) dans une telle réponse, cette réponse comporte au moins une indication, dite indication de technologie d'accès radio (ou RAT), relative à au moins une RAT autorisée et/ou au moins une RAT interdite pour ledit terminal mobile, au moins dans ladite structure de localisation.

Les informations relatives aux RAT(s) autorisée(s) et/ou interdite(s) pour un terminal mobile peuvent être mises à jour, dans le réseau, à la suite de tout changement tel que reconfiguration, extension, ...etc.. En outre, si l'entité de réseau coeur CN considérée ne possède pas elle-même de telles informations, elle peut obtenir ces informations d'une autre entité de réseau, telle que notamment une base de données de type HLR (« Home Location Register ») ou VLR (« Visitor Location Register »).

Suivant un exemple, ladite indication de RAT est explicite, ladite réponse comportant au moins un paramètre spécifique.

Suivant un autre exemple, ladite indication de RAT est implicite, les différentes RATs étant supposées autorisées pour ledit terminal si ladite réponse ne contient aucun paramètre spécifique.

Suivant un exemple, ladite réponse comporte en outre une indication, dite indication de zone géographique, relative à une zone géographique pour laquelle s'applique ladite autorisation et/ou ladite interdiction.

Par exemple, ladite indication de zone géographique indique si ladite autorisation et/ou ladite interdiction s'appliquent seulement pour ladite structure de localisation (LA « Location Area ») ou pour tout le réseau (PLMN « Public Land Mobile Network »).

Suivant un exemple, ladite réponse peut correspondre à un message d'acceptation de mise à jour de localisation (ou « Location Update Request »).

Suivant un autre exemple, ladite réponse peut correspondre à un message de rejet de mise à jour de localisation (ou « Location Update Reject »).

D'autres exemples que ceux indiqués ci-dessus sont bien entendu possibles, et on comprendra qu'il n'est pas possible de donner ici une liste exhaustive de tous les exemples possibles.

Dans une étape notée 3, outre les traitements effectués de manière habituelle (et par conséquent non re-décrits ici de manière plus détaillée) sur réception de ladite réponse, le terminal mobile extrait de ladite réponse des informations relatives à au moins une RAT autorisée et/ou au moins une RAT interdite, et ces informations peuvent ensuite être utilisées par le terminal de différentes façons.

Suivant un exemple :
- le terminal détermine si la RAT associée à la cellule sélectionnée (généralement diffusée, avec d'autres informations système, dans la cellule considérée) correspond à une RAT interdite, selon les informations ainsi extraites de ladite réponse,
- si oui, le terminal mobile MT sélectionne une autre cellule, associée à une RAT autorisée, et si nécessaire (notamment dans le cas de nouveau changement de LA), comme illustré en pointillés dans l'étape 4, transmet une nouvelle requête d'enregistrement à l'entité de réseau CN.

Suivant un exemple :
- le terminal commande la mémorisation d'informations correspondant à au moins une RAT interdite, telle qu'indiquée par ladite réponse, dans des moyens de mémorisation pouvant être prévus notamment dans un module d'identification d'abonné associé audit terminal mobile (appelé aussi SIM/USIM, pour « GSM Subscriber Identity Module / Universal Subscriber Identity Module »),
- avant de sélectionner une cellule, le terminal mobile vérifie que cette cellule n'est pas associée à une RAT interdite, selon les informations ainsi mémorisées.

Lesdites informations mémorisées peuvent être mises à jour si de nouvelles informations relatives à au moins une RAT interdite sont reçues du réseau, ce qui peut être le cas notamment dans le cas de nouveau changement de LA.

Lesdites informations mémorisées peuvent être effacées, par exemple dans le cas de changement de réseau (PLMN), ou dans le cas de retrait de la carte SIM/USIM, ou sur commande de l'utilisateur, ... etc.

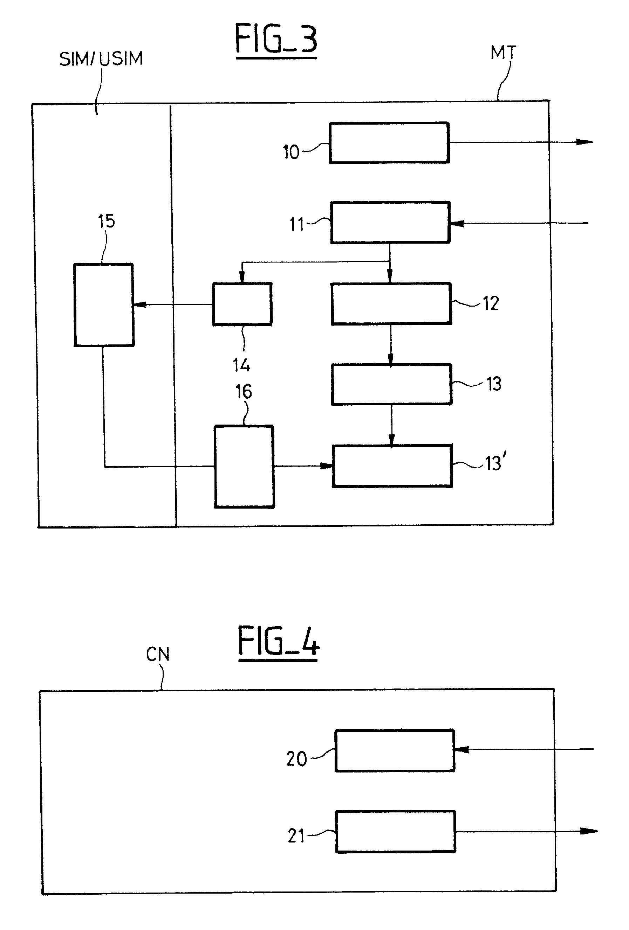

La figure 3 illustre un exemple de moyens pouvant être utilisés dans un terminal mobile et dans un module d'identification d'abonné associé à ce terminal, pour mettre en oeuvre un procédé suivant la présente invention.

Dans l'exemple illustré, le terminal mobile noté MT comporte (en plus d'autres moyens classiques non rappelés ici) :
- des moyens, notés 10, pour transmettre à une entité de réseau, dans une cellule donnée, une requête d'enregistrement dans une structure de localisation incluant ladite cellule,
- des moyens, notés 11, pour recevoir de ladite entité de réseau, en réponse à ladite requête, une réponse comportant au moins une indication, dite indication de technologie d'accès radio (ou RAT), relative à au moins une RAT autorisée et/ou au moins une RAT interdite pour ledit terminal mobile, au moins dans ladite structure de localisation.

Suivant un exemple, le terminal mobile MT comporte en outre :
- des moyens, notés 12, pour, sur réception de ladite réponse, déterminer si la RAT associée à ladite cellule (généralement diffusée, avec d'autres informations système, dans la cellule considérée) correspond à une RAT interdite, telle qu'indiquée par ladite réponse,
- des moyens, notés 13, pour, si oui, sélectionner une autre cellule, associée à une RAT autorisée (les moyens 13 pouvant ainsi coopérer avec des moyens de sélection de cellule, notés 13', prévus de manière classique dans le terminal).

Suivant un exemple, le terminal mobile MT comporte en outre :
- des moyens, notés 14, pour, sur réception de ladite réponse, commander la mémorisation d'informations correspondant à au moins une RAT interdite telle qu'indiquée par ladite réponse, dans des moyens de mémorisation, notés 15, pouvant être prévus notamment dans un module d'identification d'abonné associé, noté SIM/USIM,
- des moyens, notés 16, pour, avant de sélectionner une cellule, vérifier que cette cellule n'est pas associée à une RAT interdite, selon les informations ainsi mémorisées (les moyens 16 pouvant ainsi coopérer avec des moyens de sélection de cellule, notés 13', prévus de manière classique dans le terminal).

Un module d'identification d'abonné, noté SIM/USIM, associé au terminal mobile MT, peut ainsi comporter (en plus d'autres moyens classiques non rappelés ici) :
- des moyens, notés 15, pour mémoriser des informations correspondant à au moins une RAT interdite pour un terminal mobile associé audit module, telles que reçues d'une entité de réseau en réponse à un requête d'enregistrement transmise par ledit terminal.

La figure 4 illustre un exemple de moyens pouvant être utilisés dans une entité de réseau, telle que notamment une entité serveuse de réseau coeur, pour mettre en oeuvre un procédé suivant la présente invention.

Dans l'exemple illustré, une telle entité de réseau, notée CN, comporte (en plus d'autres moyens classiques non rappelés ici) :
- des moyens, notés 20, pour recevoir d'un terminal mobile, dans une cellule donnée, une requête d'enregistrement dans une structure de localisation incluant ladite cellule,
- des moyens, notés 21, pour transmettre au terminal mobile, en réponse à ladite requête, une réponse comportant au moins une indication, dite indication de technologie d'accès radio (ou RAT), relative à au moins une RAT autorisée et/ou au moins une RAT interdite pour ledit terminal mobile, au moins dans ladite structure de localisation.

Les différents moyens illustrés sur les figures 3 et 4 peuvent opérer suivant le procédé décrit précédemment en relation avec la figure 2; leur réalisation particulière ne présentant pas de difficulté particulière pour l'homme du métier, de tels moyens ne nécessitent pas d'être décrits ici de manière plus détaillée que par leur fonction.

## Revendications

1. Procédé pour améliorer la gestion de la mobilité dans un système cellulaire de communications mobiles dans lequel les cellules sont regroupées en structures de localisation comportant des cellules supportant différentes technologies d'accès radio, ledit procédé comportant des étapes selon lesquelles :
- un terminal mobile (MT) dans une cellule donnée transmet (1) à une entité de réseau (CN) une requête d'enregistrement dans une structure de localisation incluant ladite cellule,
- sur réception de ladite requête, ladite entité de réseau (CN) transmet (2) au terminal mobile (MT) une réponse comportant au moins une indication, dite indication de technologie d'accès radio, relative à au moins une technologie d'accès radio autorisée et/ou au moins une technologie d'accès radio interdite pour ledit terminal mobile, au moins dans ladite structure de localisation.

2. Procédé selon la revendication 1, dans lequel ladite indication de technologie d'accès radio est explicite, ladite réponse comportant au moins un paramètre spécifique.

3. Procédé selon l'une des revendications 1 ou 2, dans lequel ladite indication de technologie d'accès radio est implicite, les différentes technologies d'accès radio étant supposées autorisées pour ledit terminal si ladite réponse ne contient aucun paramètre spécifique.

4. Procédé selon l'une des revendications 1 à 3, dans lequel ladite réponse comporte en outre une indication, dite indication de zone géographique, relative à une zone géographique pour laquelle s'applique ladite autorisation et/ou ladite interdiction.

5. Procédé selon la revendication 4, dans lequel ladite indication de zone géographique indique si ladite autorisation et/ou ladite interdiction s'applique seulement pour ladite structure de localisation ou pour tout le réseau.

6. Procédé selon l'une des revendications 1 à 5, dans lequel ladite requête correspond à une requête de mise à jour de localisation, et ladite réponse correspond à une acceptation ou à un rejet de mise à jour de localisation.

7. Procédé selon l'une des revendications 1 à 6, comportant des étapes (3) selon lesquelles :
- sur réception de ladite réponse, le terminal mobile détermine si la technologie d'accès radio supportée par ladite cellule correspond à une technologie d'accès radio interdite, telle qu'indiquée par ladite réponse,
- si oui, le terminal mobile sélectionne une autre cellule, supportant une technologie d'accès radio autorisée.

8. Procédé selon l'une des revendications 1 à 7, comportant des étapes (3) selon lesquelles :
- sur réception de ladite réponse, le terminal mobile commande la mémorisation d'informations correspondant à au moins une technologie d'accès radio interdite telle qu'indiquée par ladite réponse,
- avant de sélectionner une cellule, le terminal mobile vérifie que la technologie d'accès radio supportée par cette cellule ne correspond pas à une technologie d'accès radio interdite, selon les informations ainsi mémorisées.

9. Procédé selon la revendication 8, dans lequel :
- le terminal mobile commande ladite mémorisation, dans un module d'identification d'abonné associé audit terminal mobile.

10. Procédé selon l'une des revendications 8 ou 9, dans lequel lesdites informations mémorisées sont effacées dans le cas de changement de PLMN.

11. Procédé selon l'une des revendications 7 ou 8, dans lequel lesdites informations mémorisées sont effacées dans le cas de retrait dudit module d'identification d'abonné, ou sur commande de l'utilisateur.

12. Terminal mobile (MT) comportant :
- des moyens (10) pour transmettre à une entité de réseau (CN), dans une cellule donnée, une requête d'enregistrement dans une structure de localisation incluant ladite cellule,
- des moyens (11) pour recevoir de ladite entité de réseau (CN), en réponse à ladite requête, une réponse comportant au moins une indication, dite indication de technologie d'accès radio, relative à au moins une technologie d'accès radio autorisée et/ou au moins une technologie d'accès radio interdite pour ledit terminal mobile, au moins dans ladite structure de localisation.

13. Terminal mobile selon la revendication 12, comportant :
- des moyens (12) pour, sur réception de ladite réponse, déterminer si la technologie d'accès radio supportée par ladite cellule correspond à une technologie d'accès radio interdite, telle qu'indiquée par ladite réponse,
- des moyens (13) pour, si oui, sélectionner une autre cellule, supportant une technologie d'accès radio autorisée.

14. Terminal mobile selon l'une des revendications 12 ou 13, comportant :
- des moyens (14) pour, sur réception de ladite réponse, commander la mémorisation d'informations correspondant à au moins une technologie d'accès radio interdite telle qu'indiquée par ladite réponse,
- des moyens (16) pour, avant de sélectionner une cellule, vérifier que la technologie d'accès radio supportée par cette cellule ne correspond pas à une technologie d'accès radio interdite, selon les informations ainsi mémorisées.

15. Module d'identification d'abonné (SIM/USIM), comportant :
- des moyens (15) pour mémoriser des informations correspondant à au moins une technologie d'accès radio interdite pour un terminal mobile associé audit module, telles que reçues d'une entité de réseau en réponse à un requête d'enregistrement transmise par ledit terminal.

16. Entité de réseau de communications mobiles (CN), comportant :
- des moyens (20) pour recevoir d'un terminal mobile (MT), dans une cellule donnée, une requête d'enregistrement dans une structure de localisation incluant ladite cellule,
- des moyens (21) pour transmettre au terminal mobile (MT), en réponse à ladite requête, une réponse comportant au moins une indication, dite indication de technologie d'accès radio, relative à au moins une technologie d'accès radio autorisée et/ou au moins une technologie d'accès radio interdite pour ledit terminal mobile, au moins dans ladite structure de localisation.
